# EUROPÄISCHE PATENTANMELDUNG

(11) **EP 1 671 858 A1**
(43) Veröffentlichungstag der Anmeldung: **21.06.2006**
(21) Anmeldenummer: 05026831.7
(22) Anmeldetag: 08.12.2005
(51) Int. Cl.: B60R 21/276

(54) **Gassackmodul mit Abströmöffnung**

(30) Priorität: 16.12.2004 DE 202004019446 U
(71) Anmelder: TRW Automotive Safety Systems GmbH, 63743 Aschaffenburg (DE)
(72) Erfinder: Heist, Helga, 63846 Laufach (DE); Kreuzer, Martin, 63839 Kleinwallstadt (DE); Keutz, Markus, 64380 Rossdorf (DE); Lehmann, Michael, 63739 Aschaffenburg (DE); Fellhauer, Joachim, 63741 Nilkheim (DE); Haese, Lutz, 63739 Aschaffenburg (DE); Schneider, Michael, Dr., 63834 Sulzbach (DE); Deckenhoff, Michael, 48249 Dülmen (DE); Helmstetter, Matthias, 63743 Aschaffenburg (DE); Freundenberg, Klaus, 63743 Aschaffenburg (DE); Britz, Thomas, Dr., 63856 Bessenbach (DE); Magoley, Marcus, Dr., 63739 Aschaffenburg (DE)
(74) Vertreter: Strass, Jürgen

(57) **Zusammenfassung**

Ein Gassackmodul für eine Fahrzeuginsassen-Rückhaltevorrichtung hat eine in einem festen Bauteil (10) des Gassackmoduls gebildete Abströmöffnung (12), durch die Gas entweichen kann. An der Abströmöffnung (12) ist eine Steuereinrichtung vorgesehen, durch die Gas hindurchtreten kann. Die Steuereinrichtung ist so ausgelegt, daß die Menge des durchtretenden Gases von der Strömungsgeschwindigkeit des Gases abhängt.

## Beschreibung

Die Erfindung betrifft ein Gassackmodul für eine Fahrzeuginsassen-Rückhaltevorrichtung mit einer in einem festen Bauteil des Gassackmoduls gebildeten Abströmöffnung, durch die Gas entweichen kann.

Grundsätzlich soll bei einem Gassackmodul der Gassack mit dem vom Gasgenerator erzeugten Gas möglichst schnell befüllt werden. In bestimmten Fällen ist es allerdings wünschenswert, die Gasmenge bzw. den Innendruck im Gassack an besondere Bedingungen anzupassen. Zu diesem Zweck können im Gassack selbst oder in festen Bauteilen des Gassackmoduls freigebbare Abströmöffnungen vorgesehen sein.

Aus der US 2004/0 051 285 A1 ist beispielsweise ein Gassackmodul mit Ventilklappen bekannt, die in einem Gasgeneratorträger gebildete Abströmöffnungen verschließen bzw. freigeben können. Die Ventilklappen sind mittels Fangbändern mit einem dem Fahrzeuginsassen zugewandten Teil des Gassackgewebes verbunden. Die Ventilklappen befinden sich bei Aktivierung des Gassackmoduls zunächst in der Öffnungsstellung, so daß Gas entweichen kann. Tritt der sich entfaltende Gassack sehr früh in Kontakt mit dem Fahrzeuginsassen, bleiben die Abströmöffnungen offen. Dadurch wird der Druck des sich entfaltenden Gassacks und damit die auf den Fahrzeuginsassen ausgeübte Kraft reduziert. Befindet sich der Fahrzeuginsasse dagegen in einer Position, die weiter vom Gassackmodul entfernt ist, werden die Abströmöffnungen im Verlauf der weiteren Entfaltung mittels der Fangbänder gegen den Innendruck des Gassacks verschlossen, so daß kein Gas mehr abströmen kann. In der US 2004/0 051 285 A1 ist auch ein anderes Konzept erwähnt, gemäß dem die Ventilklappen zunächst geschlossen sind und sich erst bei zunehmendem Gassackinnendruck öffnen.

Die Erfindung schafft ein Gassackmodul mit einer Abströmöffnung, deren effektiver Querschnitt sich mit einfachen Mitteln selbst reguliert.

Das erfindungsgemäße Gassackmodul für eine Fahrzeuginsassen-Rückhaltevorrichtung umfaßt eine in einem festen Bauteil des Gassackmoduls gebildete Abströmöffnung, durch die Gas entweichen kann, und ist dadurch gekennzeichnet, daß an der Abströmöffnung eine Steuereinrichtung vorgesehen ist, durch die Gas hindurchtreten kann, wobei die Steuereinrichtung so ausgelegt ist, daß die Menge des durchtretenden Gases von der Strömungsgeschwindigkeit des Gases abhängt.

Die erfindungsgemäß vorgesehene Steuereinrichtung ermöglicht auf einfache Weise eine automatische Anpassung der abströmenden Gasmenge in Abhängigkeit der Strömungsgeschwindigkeit des Gases.

Gemäß einem ersten Konzept der Erfindung wird dies durch einen sich bei steigender Strömungsgeschwindigkeit verengenden Strömungsquerschnitt erreicht. Hierzu sieht die Erfindung vor, daß die Steuereinrichtung zwei gegenüberliegende Platten umfaßt, wobei zwischen den Platten ein Strömungskanal gebildet ist und wenigstens eine der Platten elastisch gelagert ist. Mit steigender Strömungsgeschwindigkeit baut sich im Strömungskanal ein Unterdruck auf, der dazu führt, daß sich die elastisch gelagerte Platte auf die andere Platte zubewegt. Dadurch verengt sich der Strömungskanal, so daß der effektive Abströmquerschnitt automatisch verkleinert wird.

Vorzugsweise ist die Platte auf wenigstens einer Feder gelagert.

Der Effekt des sich aufgrund des Unterdrucks verengenden Strömungskanals kann dadurch gesteigert werden, daß beide Platten elastisch gelagert sind, d.h. beide Platten können sich aufeinander zubewegen.

Gemäß einem zweiten Konzept der Erfindung umfaßt die Steuereinrichtung einen labyrinthartigen Strömungskanal. In diesem Fall macht sich die Erfindung den Effekt zunutze, daß in einem solchen Strömungskanal die Gasströmung mit zunehmender Strömungsgeschwindigkeit turbulenter wird. Die Turbulenzen behindern die Abströmung des Gases, so daß auch hier die abströmende Gasmenge automatisch an die Strömungsgeschwindigkeit angepaßt wird.

Die Erfindung wird nachfolgend anhand zweier Ausführungsbeispiele unter Bezugnahme auf die beigefügten Zeichnungen beschrieben. In den Zeichnungen zeigen:
- Figur 1 einen Teil eines erfindungsgemäßen Gassackmoduls nach einer ersten Ausführungsform; und
- Figur 2 einen Teil eines erfindungsgemäßen Gassackmoduls nach einer zweiten Ausführungsform.

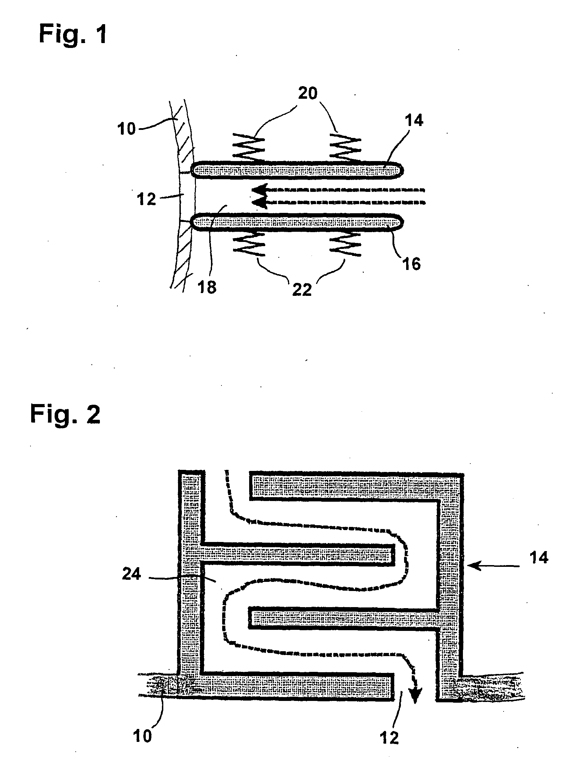

In Figur 1 ist ein festes Bauteil 10 eines Gassackmoduls dargestellt, das z.B. ein Gasgeneratorträger oder eine Wand eines Modulgehäuses sein kann. In dem festen Bauteil 10 ist eine Abströmöffnung 12 gebildet, durch die ein Teil des für die Befüllung des Gassacks des Moduls bereitgestellten Gases entweichen kann. An der Abströmöffnung 12 sind zwei Platten 14, 16 angeordnet, die sich parallel gegenüberliegen. Zwischen den beiden Platten 14, 16 ist ein in die Abströmöffnung 12 mündender Strömungskanal 18 gebildet. Die beiden Platten 14, 16 sind mittels Federn 20, 22 elastisch gelagert, so daß sie jeweils senkrecht zur Plattenebene bewegbar sind.

Die Federn 20, 22 sind so ausgelegt, daß bei geringen Strömungsgeschwindigkeiten die Platten 14, 16 ihre Lage weitgehend beibehalten. Bei hohen Strömungsgeschwindigkeiten entsteht zwischen den Platten jedoch ein merklicher Unterdruck. Der Unterdruck erzeugt Kräfte auf die Platten 14, 16, die dazu führen, daß sich die Platten 14, 16 aufeinander zubewegen, wodurch der Querschnitt des Strömungskanals 18 verkleinert wird. Die elastisch gelagerten Platten 14, 16 stellen somit eine Steuereinrichtung dar, mit der die Menge des abströmenden Gases automatisch an die Strömungsgeschwindigkeit des Gases angepaßt wird.

Figur 2 zeigt eine andere Ausführungsform der Erfindung, bei der ebenfalls die abströmende Gasmenge in Abhängigkeit der Strömungsgeschwindigkeit reguliert wird. Auch hier ist die Abströmöffnung 12 in einem festen Bauteil 10 des Gassackmoduls gebildet. Vor der Abströmöffnung 12 ist eine Konstruktion 14 vorgesehen, durch die ein labyrinthartiger Strömungskanal 24 gebildet ist, der in die Abströmöffnung 12 mündet. Auch diese Konstruktion 14 stellt eine Steuereinrichtung dar.

Die Strömung durch den Strömungskanal 24 ist bei geringen Strömungsgeschwindigkeiten laminar, so daß der Gasaustritt durch die Abströmöffnung 12 nur wenig behindert ist. Bei höheren Strömungsgeschwindigkeiten wird die Strömung aufgrund physikalischer Gesetzmäßigkeiten zunehmend turbulent. Es bilden sich Wirbel, die entgegen der Strömungsrichtung wirken. Der auf diese Weise automatisch erzeugte Strömungswiderstand begrenzt die abströmende Gasmenge.

Somit stellt sich bei beiden Ausführungsformen der effektive Querschnitt der Abströmöffnung 12 automatisch in Abhängigkeit der Strömungsgeschwindigkeit ein.

## Patentansprüche

1. Gassackmodul für eine Fahrzeuginsassen-Rückhaltevorrichtung mit einer in einem festen Bauteil (10) des Gassackmoduls gebildeten Abströmöffnung (12), durch die Gas entweichen kann, **dadurch gekennzeichnet, daß** an der Abströmöffnung (12) eine Steuereinrichtung vorgesehen ist, durch die Gas hindurchtreten kann, wobei die Steuereinrichtung so ausgelegt ist, daß die Menge des durchtretenden Gases von der Strömungsgeschwindigkeit des Gases abhängt.

2. Gassackmodul nach Anspruch 1, **dadurch gekennzeichnet, daß** die Steuereinrichtung zwei gegenüberliegende Platten (14, 16) umfaßt, wobei zwischen den Platten (14, 16) ein Strömungskanal (18) gebildet ist und wenigstens eine der Platten (14, 16) elastisch gelagert ist.

3. Gassackmodul nach Anspruch 2, **dadurch gekennzeichnet, daß** die Platte (14, 16) auf wenigstens einer Feder (20, 22) gelagert ist.

4. Gassackmodul nach Anspruch 2 oder 3, **dadurch gekennzeichnet, daß** beide Platten (14, 16) elastisch gelagert sind.

5. Gassackmodul nach Anspruch 1, **dadurch gekennzeichnet, daß** die Steuereinrichtung einen labyrinthartigen Strömungskanal (24) umfaßt.
